# EUROPEAN PATENT APPLICATION

(11) **EP 4 147 913 A1**
(43) Date of publication of application: **15.03.2023**
(21) Application number: 21822555.5
(22) Date of filing: 10.06.2021
(51) Int. Cl.: B60Q 1/50, B60Q 1/02, B60Q 1/08

(54) **VEHICLE LIGHT CONTROL METHOD, APPARATUS AND SYSTEM**

(30) Priority: 11.06.2020 CN 202010530614
(71) Applicant: Great Wall Motor Company Limited, Baoding, Hebei 071000 (CN)
(72) Inventor: LIU, Qinghe, Baoding, Hebei 071000 (CN); LIU, Yang, Baoding, Hebei 071000 (CN); RAN, Fei, Baoding, Hebei 071000 (CN); LI, Caiyun, Baoding, Hebei 071000 (CN); WANG, Xichun, Baoding, Hebei 071000 (CN); HAN, Shanshan, Baoding, Hebei 071000 (CN)
(74) Representative: dompatent von Kreisler Selting Werner - Partnerschaft von Patent- und Rechtsanwälten mbB
(86) International application number: PCT/CN2021/099466
(87) International publication number: WO 2021/249495

(57) **Abstract**

A method, an apparatus and a system for lamp control of vehicle, the method includes: receiving, sent by a terminal device, position information of the terminal device, and obtaining position information of the vehicle; calculating a distance between the terminal device and the vehicle according to the position information of the terminal device and the position information of the vehicle; generating, when the distance is less than or equal to a preset distance, first information of the terminal device with respect to the vehicle, and turning on an outer lamp of the vehicle corresponding to a location of the terminal device according to the first information. Thus, when the terminal device is located within a specified illumination distance, the outer lamp of the vehicle corresponding to the location of the terminal device can be turned on, intelligent illumination for a road condition is provided for the driver in a vehicle entering process of the driver, a problem of inconvenience of the driver for walking to the location of the vehicle under relatively dark light and even an occurrence of personal safety problem are avoided.

## Description

### CROSS-REFERENCE TO RELATED APPLICATIONS

The present disclosure claims priority to Chinese patent application No. 202010530614.6 filed on June 11, 2020 and entitled "method and apparatus for lamp control of vehicle, device and system", the contents of which are incorporated into the present invention by reference in entirety.

### TECHNICAL FIELD

The present application relates to the technical field of lamp control of vehicles, and particularly to a method, an apparatus and a system for a lamp control of a vehicle.

### BACKGROUND

When a driver needs to use a vehicle, and the vehicle is just stopped at a dark place, for the security of the driver, it is necessary for the driver to use a lighting device such as a flashlight or a lighting function in the mobile phone to illuminate the road that the driver needs to walk on, so that an inconvenience is brought to the driver undoubtedly in real life, and a personal safety problem may even be caused.

### SUMMARY

In view of this, a method and an apparatus for a lamp control of a vehicle, and a system are provided in the embodiments of the present invention, which aims at solving a technical problem in the prior art that it is inconvenient for the driver to walk into the vehicle in a dark place.

In order to achieve the aforesaid objective, in the first aspect, a method for a lamp control of a vehicle is provided in the embodiments of the present invention, the method is applied to a vehicle controller terminal, and includes:
receiving, sent by a terminal device, position information of the terminal device, and obtaining position information of the vehicle;
calculating a distance between the terminal device and the vehicle according to the position information of the terminal device and the position information of the vehicle;
generating, when the distance is less than or equal to a preset distance, first information of the terminal device with respect to the vehicle, and turning on an outer lamp of the vehicle corresponding to a location of the terminal device according to the first information.

Furthermore, said generating the first information of the terminal device with respect to the vehicle includes:
generating second orientation information of the terminal device with respect to the vehicle according to the position information of the terminal device;
generating third orientation information of a vehicle head orientation of the vehicle according to the position information of the vehicle;
generating first orientation information of the terminal device with respect to the vehicle head orientation of the vehicle according to the second orientation information and the third orientation information.

Furthermore, said turning on the outer lamp of the vehicle corresponding to the location of the terminal device according to the first information includes:
turning on a front-left-outer-lamp of the vehicle when the first orientation information is a front left position of the terminal device with respect to the vehicle head orientation;
turning on a front-right-outer-lamp of the vehicle when the first orientation information is a front right position of the terminal device with respect to the vehicle head orientation;
turning on a rear-left-outer-lamp of the vehicle when the first orientation information is a rear left position of the terminal device with respect to the vehicle head;
turning on a rear-right-outer-lamp of the vehicle when the first orientation information is a rear right position of the terminal device with respect to the vehicle head.

Furthermore, said generating the first information of the terminal device with respect to the vehicle comprises:
generating third orientation information of the vehicle head orientation of the vehicle according to the position information of the vehicle;
calculating position information of a vehicle head of the vehicle and position information of a parking spot of the vehicle according to the third orientation information and the position information of the vehicle;
calculating a first distance between the terminal device and the vehicle head according to the position information of the terminal device and the position information of the vehicle head of the vehicle;
calculating a second distance between the terminal device and a vehicle tail according to the position information of the terminal device and the position information of the parking spot of the vehicle, the first distance and the second distance are used as the first information.

Furthermore, said turning on the outer lamp of the vehicle corresponding to the location of the terminal device according to the first information includes:
turning on an outer lamp of the vehicle corresponding to the vehicle head when the first distance is less than the second distance;
turning on an outer lamp of the vehicle corresponding to the vehicle tail when the first distance is greater than the second distance.

Furthermore, an information of turning on an outer lamp of the vehicle from the terminal device is received, a vehicle entry mode based on light guidance is entered.

Furthermore, after said turning on the outer lamp of the vehicle corresponding to the location of the terminal device according to the first information, the method further includes:
detecting whether a vehicle door is opened;
turning off the turned-on outer lamp of the vehicle, and exiting the vehicle entry mode based on light guidance when the vehicle door is opened.

In the second aspect, an apparatus for a lamp control of a vehicle is provided in the embodiments of the present invention, the apparatus includes:
a remote communication module configured to receive position information of a terminal device from the terminal device;
a logical operation module configured to obtain position information of the vehicle and calculate a distance between the terminal device and the vehicle according to the position information of the terminal device and the position information of the vehicle;
a vehicle orientation generation module configured to generate first information of the terminal device with respect to the vehicle when the distance is less than or equal to a preset distance;
an execution module configured to turn on an outer lamp of the vehicle corresponding to a location of the terminal device according to the first information.

In the third aspect, a system for a lamp control of a vehicle is provided, the system includes the apparatus for outer lamp control of the vehicle using the method for the lamp control of the vehicle according to any one of the embodiments; and a terminal device;
the terminal device is configured to send information for turning on an outer lamp of the vehicle to the vehicle controller when receiving an instruction for turning on the outer lamp of the vehicle input by a user, and send position information of the terminal device to the vehicle controller.

Furthermore, the terminal device is a vehicle key or a mobile electronic device.

Compared with the prior art, the embodiments of the present invention have the following beneficial effects: compared with the prior art, in the present invention, the position information of the terminal device sent by the terminal device is received, and the position information of the vehicle is obtained, and the distance between the terminal device and the vehicle is calculated according to the position information of the terminal device and the position information of the vehicle. When the distance is less than or equal to the preset distance, the first information of the terminal device with respect to the vehicle is generated, and the outer lamp corresponding to the location of the terminal device is turned on according to the first information. In this way, the outer lamp of the vehicle corresponding to the location of the terminal device can be turned on when the terminal device is located within illumination distance, intelligent illumination for road condition is provided to the driver in the vehicle entering process of the driver, a problem of inconvenience of the driver for walking to the location of the vehicle under relatively dark light is avoided, and an occurrence of personal safety problem is even avoided.

### BRIEF DESCRIPTION OF DRAWINGS

In order to describe the embodiments of the present invention more clearly, a brief introduction regarding the accompanying drawings that need to be used for describing the embodiments or the existing technologies is given below. It is apparent that the accompanying drawings described below are merely some embodiments of the present invention, a person of ordinary skill in the art may also acquire other drawings according to the current drawings without paying creative labor.
FIG. 1 illustrates a schematic diagram of an implementation process of a method for a lamp control of a vehicle provided by one embodiment of the present application;
FIG. 2 illustrates a schematic diagram of an implementation process of the method for the lamp control of the vehicle provided by another embodiment of the present application;
FIG. 3 illustrates a schematic diagram of a positional relationship between a terminal device and the vehicle provided by one embodiment of the present application;
FIG. 4 illustrates a schematic diagram of an apparatus for a lamp control of a vehicle provided by one embodiment of the present application;
FIG. 5 illustrates a schematic diagram of a system for a lamp control of a vehicle provided by one embodiment of the present application;
FIG. 6 illustrates a schematic diagram of a vehicle controller provided by one embodiment of the present application.

### DESCRIPTION OF EMBODIMENTS

In the following descriptions, in order to describe but not intended to limit the present application, concrete details including specific system structure and technique are proposed, so that a comprehensive understanding of the embodiments of the present application is facilitated. However, a person of ordinarily skill in the art should understand that, the present application can also be implemented in some other embodiments from which these concrete details are excluded. In other conditions, detailed explanations of method, circuit, device and system well known to the public are omitted, so that unnecessary details which are disadvantageous to the understanding of the description of the present application may be avoided.

For the illustration of the technical solutions of the present invention, the technical solutions of the present invention are described in detail according to embodiments below:

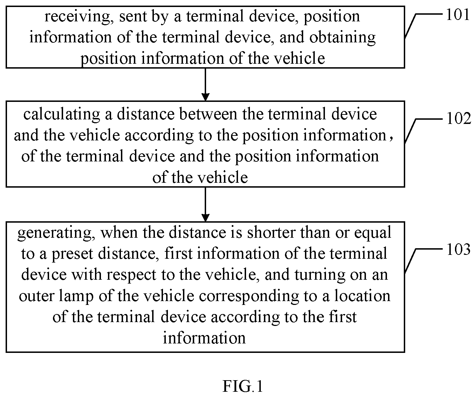

FIG. 1 illustrates a schematic diagram of an implementation process of a method for a lamp control of a vehicle according to one embodiment of the present invention, which are described in detail below. The method for the lamp control of the vehicle provided in the embodiments of the present invention may be applied to a side of a vehicle controller.

At a step of S 101, position information of a terminal device is received from the terminal device, and position information of the vehicle is obtained.

Optionally, the terminal device may be a vehicle key or a mobile electronic device, and the mobile electronic device may be a mobile phone, a tablet computer, or the like in the present invention.

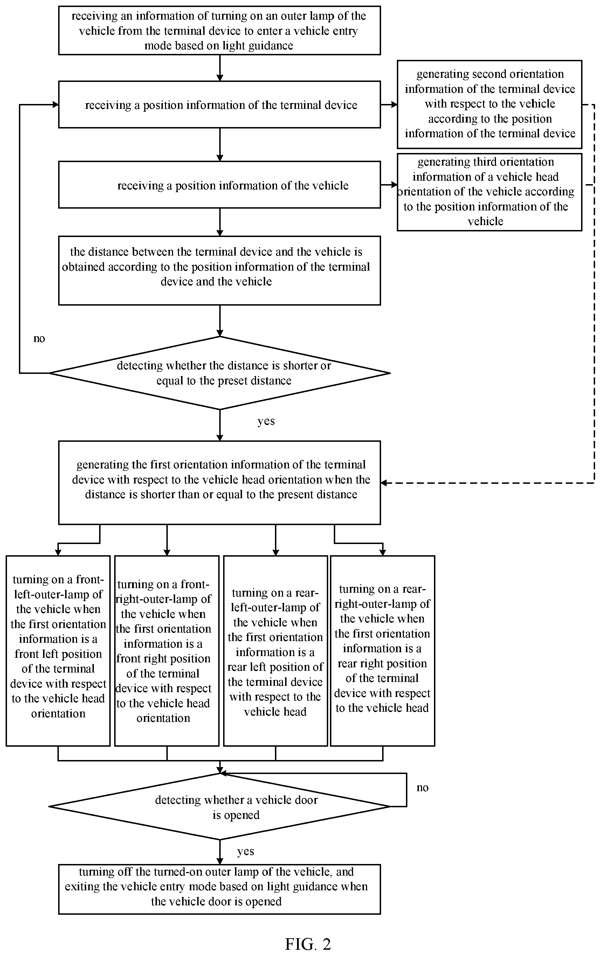

In one embodiment, as shown in FIG. 2, before the step of receiving the position information of the terminal device sent by the terminal device in the step , the method may further include: receiving information for turning on the outer lamp of the vehicle sent by the terminal device and entering a vehicle entry mode based on light guidance. Optionally, the outer lamp of the vehicle does not include a high beam of the vehicle.

That is, when the terminal device receives an instruction for turning on the outer lamp of the vehicle as input by a user, the terminal device send the information for turning on the outer lamp of the vehicle to the vehicle controller. It should be noted that, when an activation switch on the terminal device is pressed by the user, the terminal device correspondingly receives the instruction for turning on the outer lamp of the vehicle input by the user correspondingly, which indicates that the user wishes to activate the vehicle entry mode based on light guidance. Here, "the vehicle entry mode based on light guidance" is merely a name of a mode indicating that the user wishes to turn on the outer lamp of the vehicle currently, and the name of the mode is not limited in the present application. The user may change the name of the mode by setting according to his/her own requirement, preference, and the like.

Optionally, after the terminal device turns on the vehicle entry mode based on light guidance, the terminal device sends the position information of the terminal device to the vehicle controller, in order that the vehicle controller turns on the outer lamp in the orientation corresponding to the position information of the terminal device according to the position information of the terminal device.

Optionally, the position information of the terminal device may be global positioning system (Global Positioning System, GPS) information of the terminal device, that is, a GPS information generation module is arranged on the terminal device, so that the corresponding GPS information can be generated in real time according to the movement of the terminal device.

Similarly, a GPS information generation module may also be arranged in the vehicle, so that the vehicle controller can obtain real-time GPS information of the vehicle according to the GPS information generation module.

In a step of S 102, a distance between the terminal device and the vehicle is calculated according to the position information of the terminal device and the position information of the vehicle.

Optionally, this step can be implemented by generating the distance between the terminal device and the vehicle (i.e., the distance between a person and the vehicle) according to the GPS information of the terminal device and the GPS information of the vehicle.

In a step of S103, when the distance is less than or equal to a preset distance, first orientation information of the terminal device with respect to the vehicle head orientation of the vehicle is generated, and an outer lamp of the vehicle corresponding to the position of the terminal device is turned on according to the first orientation information.

In one embodiment, as shown in FIG. 2, before the step, the method may further include: whether the distance is less than or equal to a preset distance is detected. The step 103 is performed if the distance is less than or equal to a preset distance; the step S101 and the subsequent steps are continued to be performed when the distance is greater than the preset distance, so that when the mobile terminal moves to or within the preset distance, the step S 103 may be continued to be performed.

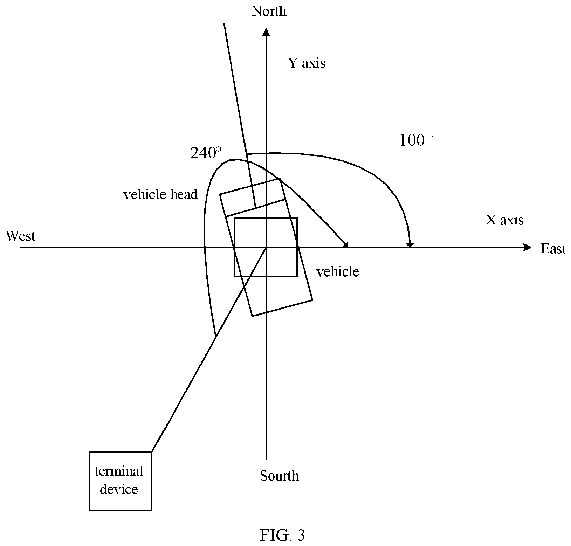

In one embodiment, firstly, third orientation information of the vehicle head orientation of the vehicle may be generated according to the position information of the vehicle, the third orientation information is a second included angle between a second straight line formed by a connection line between the vehicle head and the vehicle tail of the vehicle, and a horizontal coordinate axis or a longitudinal coordinate axis in a coordinate system established by taking the vehicle as the center. Optionally, as shown in FIG. 3, a plane rectangular coordinate system is established by taking the center of the vehicle as an origin, taking the due east direction as the horizontal coordinate axis and taking the due north direction as the longitudinal coordinate axis; Then, the vehicle head and the vehicle tail of the vehicle are taken as two points, and the second straight line is obtained by connecting the two points, so that the third orientation information of the vehicle head with respect to the reference position of the vehicle can be obtained. For example, the included angle between the vehicle head and the X axis is 100°. An included angle between the first straight line and the y-axis can also be obtained. The third orientation information of the vehicle head orientation is described with the x-axis herein.

The position information of the vehicle head of the vehicle and the position information of a parking spot of the vehicle are calculated according to the third orientation information and the position information of the vehicle. Optionally, when the position information of the vehicle head and the position information of the parking spot of the vehicle is calculated, this calculation may be performed according to the vehicle length of the general vehicle. For example, the vehicle length may be 5 meters, and the position information of the vehicle is the information of the center position of the vehicle, that is, the information of the position at the 2.5 meters length of the vehicle. Thus, the position information of the vehicle head and the vehicle tail may be calculated according to a deflection angle of the vehicle head.

A first distance between the terminal device and the vehicle head is calculated according to the position information of the terminal device and the position information of the vehicle head of the vehicle;

A second distance between the terminal device and the vehicle tail is calculated according to the position information of the terminal device and the position information of the parking spot of the vehicle. The first distance and the second distance are used as the first information.

Optionally, after the first distance and the second distance are calculated, when the first distance is less than the second distance, that is, the terminal device is closer to the vehicle head, the outer lamps corresponding to the vehicle head (i.e., the front-left-outer-lamp of the vehicle and the front-right-outer-lamp of the vehicle) is turned on.

When the first distance is greater than the second distance, that is, the terminal device is closer to the vehicle tail, the outer lamps corresponding to the vehicle tail (the rear left outer lamp and the rear right outer lamp of the vehicle) is turned on.

In order to further save the power consumption of the lamps of the vehicle, the lamp control of the vehicle may be performed in the following manner.

In one embodiment, as shown in FIG. 2, after the position information of the terminal device sent by the terminal device is received, and before the first orientation information of the terminal device with respect to the vehicle head orientation of the vehicle is generated, the method further includes: second orientation information of the terminal device with respect to the vehicle is generated according to the position information of the terminal device. Where the second orientation information may be the first included angle between the first straight line formed by the connection line between the terminal device and the vehicle, and the horizontal coordinate axis or the longitudinal coordinate axis in the coordinate system established by taking the vehicle as the center. Optionally, as shown in FIG. 3, the plane rectangular coordinate system is established by taking the center of the vehicle as an origin, taking the due east direction as the transverse coordinate axis, and taking the due north direction as the longitudinal coordinate axis, the vehicle and the terminal device are taken as two points, and the first straight line is obtained by connecting the two points. In this way, an included angle of 240 degrees between the terminal device and the X axis can be obtained. An included angle between the first straight line and the y-axiscan also be obtained. The second orientation information are described with the x-axis herein.

As shown in FIG. 2, after said obtaining the position information of the vehicle, and before said generating the first orientation information of the terminal device with respect to the vehicle head orientation of the vehicle, the method may further include: third orientation information of the vehicle head orientation of the vehicle is generated according to the position information of the vehicle. The generation of the third orientation information of the vehicle head orientation is not repeatedly described here.

As shown in FIG. 2, said generating the first orientation information of the terminal device with respect to the vehicle head orientation of the vehicle may include:
a difference between the first included angle and the second included angle is calculated according to the second orientation information and the third orientation information, and the difference is taken as the first orientation information.

In order to determine the outer lamp which should be turned on subsequently and corresponds to the terminal device, it is necessary to confirm the orientation information of the terminal device with respect to the vehicle head. Thus, the relative angle between the first straight line and the second straight line needs to be calculated according to the determined second orientation information and the third orientation information, that is, the relative angle between the first straight line and the second straight line can be obtained by subtracting the second included angle from the first included angle. As shown in FIG. 3, the included angle of 140 degrees between the first straight line and the second straight line can be obtained, so that the terminal device is at the rear of the vehicle. It needs to be noted that, when the relative angle is a positive value, it indicates that the terminal device is located at the left side of the vehicle head, when the relative angle is a negative value, it indicates that the terminal device is located at the right side of the vehicle head. In this condition, the first orientation information of the terminal device with respect to the vehicle head is the rear left direction.

As shown in FIG. 2, said turning on the outer lamp of the vehicle corresponding to the location of the terminal device according to the first information may include:
a front-left-outer-lamp of the vehicle is turned on when the first orientation information is a front left position of the terminal device with respect to the vehicle head orientation;
a front-right-outer-lamp of the vehicle is turned on when the first orientation information is a front right position of the terminal device with respect to the vehicle head orientation;
a rear-left-outer-lamp of the vehicle is turned on when the first orientation information is a rear left position of the terminal device with respect to the vehicle head orientation;
a rear-right-outer-lamp of the vehicle is turned on when the first orientation information is a rear right position of the terminal device with respect to the vehicle head orientation.

Optionally, when the terminal device is in the direction perpendicular to the direction of the vehicle body of the vertical, that is, when the terminal device is just located at a positive left direction or a positive right direction with respect to the vehicle head of the vehicle, the outer lamps close to the vehicle head (i.e., the front-left-outer-lamp and the front-right-outer-lamp) may be turned on, so that the driver can open a vehicle door directly and conveniently and enter the vehicle.

In one embodiment, as shown in FIG. 2, after the outer lamps of the vehicle corresponding to the location of the terminal device is turned on according to the first information, the method may further include:
whether the vehicle door is turned on is directed;
when the vehicle door is turned on, the turned-on outer lamps of the vehicle is turned off, and the vehicle entry mode based on light guidance is exited, and the process is terminated.

According to the method for the lamp control of the vehicle, the position information of the terminal device sent by the terminal device is received, and the position information of the vehicle is obtained, and the distance between the terminal device and the vehicle is calculated according to the position information of the terminal device and the position information of the vehicle. When the distance is less than or equal to the preset distance, the first information of the terminal device with respect to the vehicle is generated, and the outer lamp corresponding to the location of the terminal device is turned on according to the first information. In this way, the outer lamp of the vehicle corresponding to the location of the terminal device can be turned on when the terminal device is located within illumination distance, intelligent illumination for road condition is provided to the driver in the vehicle entering process of the driver, a problem of inconvenience of the driver for walking to the location of the vehicle under relatively dark light is avoided, and an occurrence of personal safety problem is even avoided.

It should be understood that, the values of serial numbers of the steps in the aforesaid embodiments do not indicate an order of execution sequences of the steps. Instead, the execution sequences of the steps should be determined by functionalities and internal logic of the steps, and thus shouldn't be regarded as limitation to an implementation process of the embodiment of the present invention.

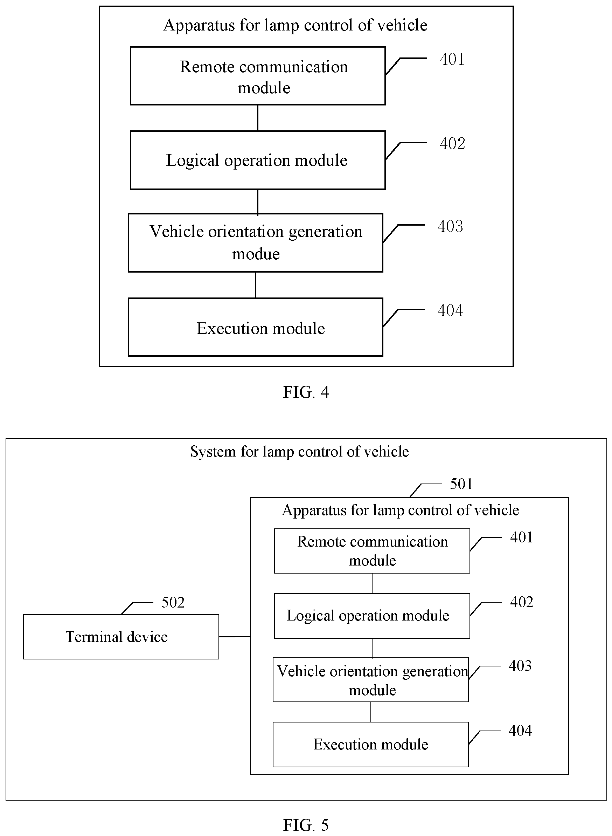

Corresponding to the method for the lamp control of the vehicle in the embodiments described above, FIG. 4 illustrates a schematic diagram of an apparatus for a lamp control of a vehicle provided by one embodiment of the present invention. As shown in FIG. 3, the apparatus may include: a remote communication module 401, a logical operation module 402, a vehicle orientation generation module 403 and an execution module 404.

The remote communication module 401 is configured to receive position information of a terminal device from the terminal device.

The logical operation module 402 configured to obtain position information of the vehicle and calculate a distance between the terminal device and the vehicle according to the position information of the terminal device and the position information of the vehicle.

The vehicle orientation generation module 403 is configured to generate first information of the terminal device with respect to the vehicle when the distance is less than or equal to a preset distance;

The execution module 404 is configured to turn on an outer lamp of the vehicle corresponding to a location of the terminal device according to the first information.

Optionally, the position information of the vehicle can be generated by the GPS information generation module and is sent to the logical operation module 402.

Optionally, the remote communication module 401 is further configured to receive an information of turning on an outer lamp of the vehicle from the terminal device to enter a vehicle entry mode based on light guidance before receiving the position information of the terminal device from the terminal device.

Optionally, the vehicle orientation generation module 403 is configured to generate the first information of the terminal device with respect to the vehicle, which can be used for:
generating second orientation information of the terminal device with respect to the vehicle according to the position information of the terminal device;
generating third orientation information of a vehicle head orientation of the vehicle according to the position information of the vehicle;
generating first orientation information of the terminal device with respect to the vehicle head orientation of the vehicle according to the second orientation information and the third orientation information.

Optionally, the execution module 403 is configured to turn on the outer lamp of the vehicle corresponding to the location of the terminal device according to the first information, which can be used for:
turning on a front-left-outer-lamp of the vehicle when the first orientation information is a front left position of the terminal device with respect to the vehicle head orientation;
turning on a front-right-outer-lamp of the vehicle when the first orientation information is a front right position of the terminal device with respect to the vehicle head orientation;
turning on a rear-left-outer-lamp of the vehicle when the first orientation information is a rear left position of the terminal device with respect to the vehicle head;
turning on a rear-right-outer-lamp of the vehicle when the first orientation information is a rear right position of the terminal device with respect to the vehicle head.

Optionally, the vehicle orientation generation module 403 is configured to generate the first information of the terminal device with respect to the vehicle, which can be used for:
generating third orientation information of the vehicle head orientation of the vehicle according to the position information of the vehicle;
calculating position information of a vehicle head of the vehicle and position information of a parking spot of the vehicle according to the third orientation information and the position information of the vehicle;
calculating a first distance between the terminal device and the vehicle head according to the position information of the terminal device and the position information of the vehicle head of the vehicle;
calculating a second distance between the terminal device and a vehicle tail according to the position information of the terminal device and the position information of the parking spot of the vehicle; the first distance and the second distance are used as the first information.

Optionally, the execution module 404 is configured to turn on the outer lamp of the vehicle corresponding to the location of the terminal device according to the first information, which is used for:
turning on an outer lamp of the vehicle corresponding to the vehicle head when the first distance is less than the second distance;
turning on an outer lamp of the vehicle corresponding to the vehicle tail when the first distance is greater than the second distance.

Optionally, after the execution module 404 is configured to turn on the outer lamp of the vehicle corresponding to the location of the terminal device according to the first information, the logical operation module 42 can be used for: detecting whether a vehicle door is opened, and enabling the execution module 404 to turn off the turned-on outer lamp of the vehicle, and exit the vehicle entry mode based on light guidance when the vehicle door is opened.

Optionally, it should be noted that, the modules in the apparatus for outer lamp control of the vehicle can either be allocated to different electronic control units of the vehicle to be implemented, or be integrated into one electronic control unit of the vehicle. For example, the logic operation module 402 may also be implemented by a body control module (Body Control Module, BCM), and the remote communication module 401 may also be implemented by an Telematics control box (Telematics Control Box, T-Box).

When the modules are implemented in the manner of being integrated into the ECU, the ECU may be disposed at any position of the vehicle, and preferably at a central position of the vehicle.

In the aforesaid apparatus for the lamp control of the vehicle, the remote communication module receives the position information of the terminal device sent by the terminal device, the logical operation module obtains the position information of the vehicle and calculates the distance between the terminal device and the vehicle according to the position information of the terminal device and the position information of the vehicle. When the distance is less than or equal to the preset distance, the vehicle orientation generation module generates the first information of the terminal device with respect to the vehicle, and the execution module turns on the outer lamp corresponding to the location of the terminal device according to the first information. In this way, the outer lamp of the vehicle corresponding to the location of the terminal device can be turned on when the terminal device is located within the illumination distance, intelligent illumination for road condition is provided to the driver in the vehicle entering process of the driver, a problem of inconvenience of the driver for walking to the location of the vehicle under relatively dark light is avoided, and an occurrence of personal safety problem is even avoided.

FIG. 5 illustrates a schematic diagram of a system for a lamp control of a vehicle provided by one embodiment of the present invention. As shown in FIG. 5, the system includes the apparatus for the lamp control of the vehicle using the method for the lamp control of the vehicle in any one of the embodiments; and a terminal device 502.

The terminal device 502 is configured to send information for turning on an outer lamp of the vehicle to the vehicle controller when receiving an instruction for turning on the outer lamp of the vehicle input by a user, and send position information of the terminal device to the vehicle controller.

Optionally, the terminal device 502 can include a GPS information generation module, a switch activation module, a remote communication module. The GPS information generation module is configured to generate GPS information according to the location of the terminal device. The switch activation module is configured to receive an instruction for turning on an outer lamp of the vehicle input by a user when receiving a press from the user. The remote communication module is configured to send the information for turning on the outer lamp of the vehicle and the position information of the terminal device to the vehicle controller.

Optionally, the terminal device 502 can be a vehicle key or a mobile electronic device. As an alternative, the terminal device 502 can a mobile electronic device including the GPS information generation module, the switch activation module, and the remote communication module. As an alternative, the terminal device 502 can a mobile potable device including the GPS information generation module, the switch activation module, the remote communication module and a power module.

In the system for the lamp control of the vehicle, according to the interaction between the vehicle controller and the terminal device, the distance between the terminal device and the vehicle is calculated according to the position information of the terminal device and the position information of the vehicle. When the distance is less than or equal to the preset distance, the first information of the terminal device with respect to the vehicle is generated, and the outer lamp corresponding to the location of the terminal device is turned on according to the first information. In this way, the outer lamp of the vehicle corresponding to the location of the terminal device can be turned on when the terminal device is located within the illumination distance, intelligent illumination for road condition is provided to the driver in the vehicle entering process of the driver, a problem of inconvenience of the driver for walking to the location of the vehicle under relatively dark light is avoided, and an occurrence of personal safety problem is even avoided.

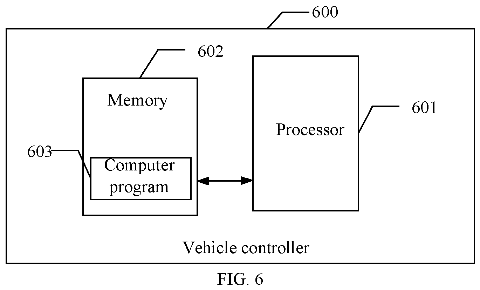

FIG. 6 illustrates a schematic diagram of a terminal device according to one embodiment of the present invention. As shown in FIG. 6, the vehicle controller 600 in this embodiment includes a processor 601, a memory 602, and a computer program 603 (e.g., a program for controlling the outer lamp of the vehicle) stored in the memory 602 and executable on the processor 601. When the computer program 603 is executed by the the processor 601, the steps (e.g., the steps S101-S103 shown in FIG. 1, or the steps shown in FIG. 2) in the embodiments of the method for the lamp control of the vehicle are implemented. When the computer program 603 is executed by the processor 601, the functions of the various modules (e.g., the functions of the modules 401, module 402, the module 403 and the module 404 shown in FIG. 4) in the apparatus embodiment are implemented.

As an example, the computer program 603 may be divided into one or a plurality of program modules, the one or plurality of program modules are stored in the memory 602, and executed by the processor 601 so as to implement the present invention. The one or plurality of program modules may be a series of computer program instruction segments that can accomplish particular functionalities, these instruction segments are used for describing an executive process of the computer program 603 in the apparatus for the lamp control of the vehicle or in the vehicle controller 600. For example, the computer program 603 can be divided into the remote communication module 401, the logical operation module 402, the vehicle orientation generation module 403 and the execution module 404. The functions of these various modules are shown in FIG. 4, and are not repeatedly described herein.

The vehicle controller 600 can be a computing device such as a desktop computer, a laptop computer, a palm computer, a cloud server, etc. The vehicle controller 600 can include but is not limited to: a processor 601, the memory 602. A person of ordinary skill in the art can understand that, FIG. 6 is only one example of the vehicle controller 600, but should not be constituted as limitation to the vehicle controller 600, more or less components than the components shown in FIG. 6 may be included. As an alternative, some components or different components may be combined; for example, the vehicle controller 600 can also include an input and output device, a network access device, a bus, etc.

The so-called processor 601 may be central processing unit (Central Processing Unit, CPU), and can also be other general purpose processor, digital signal processor (Digital Signal Processor, DSP), application specific integrated circuit (Application Specific Integrated Circuit, ASIC), field-programmable gate array (Field-Programmable Gate Array, FGPA), or some other programmable logic devices, discrete gate or transistor logic device, discrete hardware component, etc. The general purpose processor may be a microprocessor, as an alternative, the processor can also be any conventional processor, or the like.

The memory 602 may be an internal storage unit of the vehicle controller 600, such as a hard disk or a memory of the vehicle controller 600. The memory 602 may also be an external storage device of the vehicle controller 600, such as a plug-in hard disk, a smart media card (Smart Media Card, SMC), a secure digital (Secure Digital, SD) card, a flash card (Flash Card, FC) equipped on the vehicle controller 600. Furthermore, the memory 602 may not only include the internal storage unit of the vehicle controller 600, but also include the external memory of the vehicle controller 600. The memory 602 is configured to store the computer program and other procedures and data needed by the vehicle controller 600. The memory 602 can also be configured to store data that has been output or being ready to be output temporarily.

The person of ordinary skill in the art may understand clearly that, for the convenience of description and for conciseness, the dividing of the aforesaid various functional units and functional modules is merely described according to examples, in an actual application, the aforesaid functions may be assigned to different functional units and functional modules to be accomplished, that is, an inner structure of the device is divided into different functional units or modules, so that the whole or a part of functionalities described above can be accomplished. The various functional units and modules in the embodiments may be integrated into a processing unit, or each of the units exists independently and physically, or two or more than two of the units are integrated into a single unit. The aforesaid integrated unit may either by actualized in the form of hardware or in the form of software functional units. In addition, specific names of the various functional units and modules are only used to distinguish from each other conveniently, rather than being intended to limit the protection scope of the present application. Regarding the specific working process of the units and modules in the aforesaid system, reference may be made to a corresponding process in the aforementioned method embodiments, this specific working process is not repeatedly described herein.

In the aforesaid embodiments, the descriptions of the various embodiments are emphasized respectively, regarding a part of one embodiment which has not been described or disclosed in detail, reference can be made to relevant descriptions in other embodiments.

The person of ordinary skill in the art may understand that, the elements and algorithm steps of each of the examples described in connection with the embodiments disclosed herein may be implemented in electronic hardware, or in combination with computer software and electronic hardware. Whether these functions are implemented by hardware or software depends on the specific application and design constraints of the technical solution. The skilled people could use different methods to implement the described functions for each particular application, however, such implementations should not be considered as going beyond the scope of the present application.

It should be understood that, in the embodiments of the present application, the disclosed device/terminal device and method could be implemented in other ways. For example, the device described above are merely illustrative; for example, the division of the units is only a logical function division, and other division could be used in the actual implementation, for example, multiple units or components could be combined or integrated into another system, or some features may be ignored, or not performed. In another aspect, the coupling or direct coupling or communicating connection shown or discussed could be an indirect coupling or a communicating connection through some interfaces, devices or units, and the coupling or direct coupling or communicating connection could be electrical, mechanical, or in other form.

The units described as separate components can be or can not be physically separate, the components shown as units can be or can not be physical units, the components may be located in one place, or be distributed onto multiple network elements. A part or a whole of the elements can be selected to achieve the objective of the technical solution of this embodiment according to the actual requirement.

In addition, the various functional units in each of the embodiments of the present application may be integrated into a single processing unit, or exist individually and physically, or two or more than two units are integrated into a single unit. The aforesaid integrated unit can either be achieved by hardware, or be achieved in the form of software functional units.

When the integrated unit is achieved in the form of software functional units, and is sold or used as an independent product, the integrated unit may be stored in a computer readable storage medium. Based on this understanding, a whole or part of flow process for implementing the method in the embodiments of the present application can also be accomplished in the manner of using computer program to instruct relevant hardware. When the computer program is executed by the processor, the steps in the various method embodiments described above may be implemented. Wherein, the computer program comprises computer program codes, which may be in the form of source code, object code, executable documents or some intermediate form, etc. The computer readable medium can include: any physical equipment or device that can carry the computer program codes, recording medium, USB flash disk, mobile hard disk, hard disk, optical disk, computer memory, read-only memory (Read-Only Memory, ROM), random access memory (Random Access Memory, RAM), electrical carrier signal, telecommunication signal and software distribution medium, etc. It needs to be explained that, the contents contained in the computer readable medium may be added or reduced appropriately according to the requirement of legislation and patent practice in a judicial district, for example, in some judicial districts, according to legislation and patent practice, the computer readable medium doesn't include electrical carrier signal and telecommunication signal.

The embodiments described above are only intended to explain but not to limit the technical solutions of the present application. Although the present application has been explained in detail with reference to these embodiments, a person of ordinary skilled in the art can understand that, the technical solutions disclosed in the embodiments can also be amended, some technical features in the technical solutions can also be equivalently replaced; the amendments or the equivalent replacements don't cause the essence of the corresponding technical solutions to be deviated from the spirit and the scope of the technical solutions in the embodiments of the present application, and thus should all be included in the protection scope of the present application.

## Claims

1. A method for a lamp control of a vehicle, which is applied to the vehicle, the method comprising:
receiving, sent by a terminal device, position information of the terminal device, and obtaining position information of the vehicle;
calculating a distance between the terminal device and the vehicle according to the position information of the terminal device and the position information of the vehicle;
generating, when the distance is less than or equal to a preset distance, first information of the terminal device with respect to the vehicle, and turning on an outer lamp of the vehicle corresponding to a location of the terminal device according to the first information.

2. The method for the lamp control of the vehicle according to claim 1, wherein said generating the first information of the terminal device with respect to the vehicle comprises:
generating second orientation information of the terminal device with respect to the vehicle according to the position information of the terminal device;
generating third orientation information of a vehicle head orientation of the vehicle according to the position information of the vehicle;
generating first orientation information of the terminal device with respect to the vehicle head orientation of the vehicle according to the second orientation information and the third orientation information.

3. The method for the lamp control of the vehicle according to claim 2, wherein said turning on the outer lamp of the vehicle corresponding to the location of the terminal device according to the first information comprises:
turning on a front-left-outer-lamp of the vehicle when the first orientation information is a front left position of the terminal device with respect to the vehicle head orientation;
turning on a front-right-outer-lamp of the vehicle when the first orientation information is a front right position of the terminal device with respect to the vehicle head orientation;
turning on a rear-left-outer-lamp of the vehicle when the first orientation information is a rear left position of the terminal device with respect to the vehicle head;
turning on a rear-right-outer-lamp of the vehicle when the first orientation information is a rear right position of the terminal device with respect to the vehicle head.

4. The method for the lamp control of the vehicle according to claim 1, wherein said generating the first information of the terminal device with respect to the vehicle comprises:
generating third orientation information of the vehicle head orientation of the vehicle according to the position information of the vehicle;
calculating position information of a vehicle head of the vehicle and position information of a parking spot of the vehicle according to the third orientation information and the position information of the vehicle;
calculating a first distance between the terminal device and the vehicle head according to the position information of the terminal device and the position information of the vehicle head of the vehicle;
calculating a second distance between the terminal device and a vehicle tail according to the position information of the terminal device and the position information of the parking spot of the vehicle, the first distance and the second distance are used as the first information.

5. The method for the lamp control of the vehicle according to claim 4, wherein said turning on the outer lamp of the vehicle corresponding to the location of the terminal device according to the first information comprises:
turning on an outer lamp of the vehicle corresponding to the vehicle head when the first distance is less than the second distance;
turning on an outer lamp of the vehicle corresponding to the vehicle tail when the first distance is greater than the second distance.

6. The method for the lamp control of the vehicle according to any one of claims 1 to 5, further comprising:
receiving an information of turning on an outer lamp of the vehicle from the terminal device to enter a vehicle entry mode based on light guidance.

7. The method for the lamp control of the vehicle according to claim 6, wherein after said turning on the outer lamp of the vehicle corresponding to the location of the terminal device according to the first information, the method further comprises:
detecting whether a vehicle door is opened;
turning off the turned-on outer lamp of the vehicle, and exiting the vehicle entry mode based on light guidance when the vehicle door is opened.

8. The method for the lamp control of the vehicle according to claim 2, wherein said generating the first orientation information of the terminal device with respect to the vehicle head orientation of the vehicle comprises:
calculating a difference value between a first included angle and a second included angle according to the second orientation information and the third orientation information, and using the difference value as the first orientation information;
wherein the second orientation information is the first included angle between a first straight line formed by a connection line between the terminal device and the vehicle and with a horizontal coordinate axis or a longitudinal coordinate axis in a coordinate system established by taking the vehicle as a center, the third orientation information is the second included angle between a second straight line formed by a connecting line between the vehicle head and the vehicle tail, and the horizontal coordinate axis or the longitudinal coordinate axis in the coordinate system established by taking the vehicle as the center.

9. An apparatus for a lamp control of a vehicle, comprising:
a remote communication module configured to receive position information of a terminal device from the terminal device;
a logical operation module configured to obtain position information of the vehicle and calculate a distance between the terminal device and the vehicle according to the position information of the terminal device and the position information of the vehicle;
a vehicle orientation generation module configured to generate first information of the terminal device with respect to the vehicle when the distance is less than or equal to a preset distance;
an execution module configured to turn on an outer lamp of the vehicle corresponding to a location of the terminal device according to the first information.

10. A system for a lamp control of a vehicle, comprising:
an apparatus for outer lamp control of the vehicle using the method for the lamp control of the vehicle according to any one of claims 1-8; and
a terminal device;
the terminal device is configured to send information for turning on an outer lamp of the vehicle to the vehicle controller when receiving an instruction for turning on the outer lamp of the vehicle input by a user, and send position information of the terminal device to the vehicle controller.

11. The system for the lamp control of the vehicle according to claim 10, wherein the terminal device is a vehicle key or a mobile electronic device.

12. The system for the lamp control of the vehicle according to claim 10, wherein the terminal device is a mobile portable device comprising a GPS information generation module, a switch activation module, a remote communication module, and a power module.

13. The vehicle lighting control system according to claim 12, wherein the GPS information generation module is configured to generate GPS information according to the location of the terminal device;
the switch activation module is configured to receive an instruction for turning on an outer lamp of the vehicle input by a user when receiving a press from the user;
the remote communication module is configured to send the information for turning on the outer lamp of the vehicle and the position information of the terminal device to the vehicle controller.

14. A vehicle controller, comprising:
a processor, a memory and a computer program stored in the memory and executable on the processor;
the processor is configured to, when executing the computer program, implement steps of the method for the lamp control of the vehicle according to any one of claims 1-8.

15. A computer-readable storage medium, which stores a computer program, that, when executed by a processor, implements steps of the method for the lamp control of the vehicle according to any one of claims 1-8.
